# EUROPEAN PATENT SPECIFICATION

(11) **EP 0 751 451 B1**
(45) Date of publication and mention of the grant of the patent: **27.09.2000**
(21) Application number: 95830280.4
(22) Date of filing: 30.06.1995
(51) Int. Cl.: G05F 1/46, G05F 3/22, H02J 7/14

(54) **Reference voltage generator, having a double slope temperature characteristic, for a voltage regulator of an automotive alternator**
Referenzspannungsgenerator mit Dual-Slope Temperaturcharakteristik für einen Spannungsregler von einem Kraftfahrzeugwechselstromerzeuger
Générateur de tension de référence ayant une caractéristique en température à double pente pour un régulateur de tension d'un alternateur d'automobile

(43) Date of publication of application: 02.01.1997
(73) Proprietor: STMicroelectronics S.r.l., 20041 Agrate Brianza (Milano) (IT)
(72) Inventor: Merlo, Mauro, I-27020 Torre d'Isola (Pavia) (IT); Cocetta, Franco, I-33040 Premariacco (Udine) (IT); Marchio, Fabio, I-20018 Sedriano (Milano) (IT); Grasso, Massimo, I-14100 Asti (IT); Murari, Bruno, I-20052 Monza (Milano) (IT)
(74) Representative: Botti, Mario

(56) References cited:
- EP-A- 0 350 077
- EP-A- 0 498 727
- EP-A- 0 557 739
- WO-A-91/07713
- US-A- 4 990 846
- US-A- 5 239 256

## Description

This invention relates to reference voltage generating circuits, in particular to such circuits as can be used in monolithically integratable voltage regulators for automotive alternators.

The principal function of a regulator for automotive alternators is to drive the field winding of the alternator so as to have an appropriate voltage value produced at the alternator output for charging the battery and powering any electric equipment of the motor vehicle.

The battery charging process is heavily dependent on both the type of battery used and the technology employed in the battery construction, the leading variable in importance being represented here by the temperature at which the charging takes place.

Most suppliers of alternators currently demand an alternator output voltage of about 14.5V (at 25°C) which tapers with increasing temperature, but the problem has recently been raised of providing an output voltage which would decrease in the -35°C to 70°C range more rapidly than from 70°C to 150°C, most probably because batteries are now manufactured using new technologies (different materials). It is obviously the voltage regulator of the alternator that is to fill this demand.

Modern automotive designs provide for an ever expanding utilization of electronic devices to control the main functions of motor vehicles (including, of course, motor boats), and a current trend in this respect favors the concentration of several functions in a single integrated circuit device.

For instance, a voltage regulating circuit for the alternator and a troubleshooting circuit for the vehicle own equipment may be integrated monolithically to a single device.

An example of reference voltage developing circuit that develops a multiple slope reference voltage function of temperature is disclosed in the US Patent No. 4,990,846.

The underlying technical problem of this invention is, therefore, to provide a reference voltage generator having a dual slope temperature characteristic, for use in an alternator voltage regulator, which can be integrated monolithically with the latter on a single integrated circuit device.

This problem is solved by a reference voltage generator as indicated above and defined in the characterizing portions of the appended claims to this specification.

The features and advantages of a reference voltage generator according to the invention will be apparent from the following detailed description of an embodiment thereof, given by way of example and not of limitation with reference to the accompanying drawings.

In the drawings:
Figure 1 is a circuit diagram for a modified bandgap circuit to be used in a reference voltage generator according to the invention;
Figure 2 is a circuit diagram for a reference voltage generator with dual slope temperature characteristic according to the invention; and
Figure 3 illustrates the characteristic obtainable versus temperature from a reference voltage generator according to the invention.

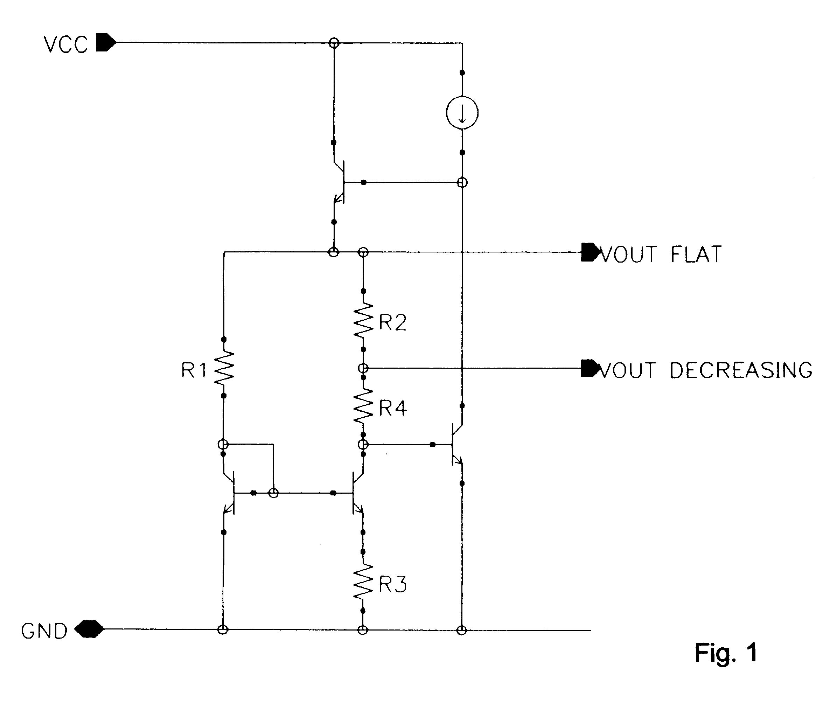

The diagram in Figure 1 is typical for a bandgap circuit, well known to the skilled ones in the art, which is used to produce an output voltage VOUT which is constant with temperature, namely a flat characteristic.

In this case, however, instead of the single resistor of conventional design, an equivalent pair of resistors, R2 and R4, are used to form a voltage divider.

Thus, from a single bandgap circuit, a voltage can be generated whose value, as simple calculations show, decreases as temperature rises.

It is in this way that a reference voltage generator with high accuracy can be provided which has a dual slope temperature characteristic, is monolithically integratable, and adapted for automotive applications where the range of operating temperatures happens to be particularly wide.

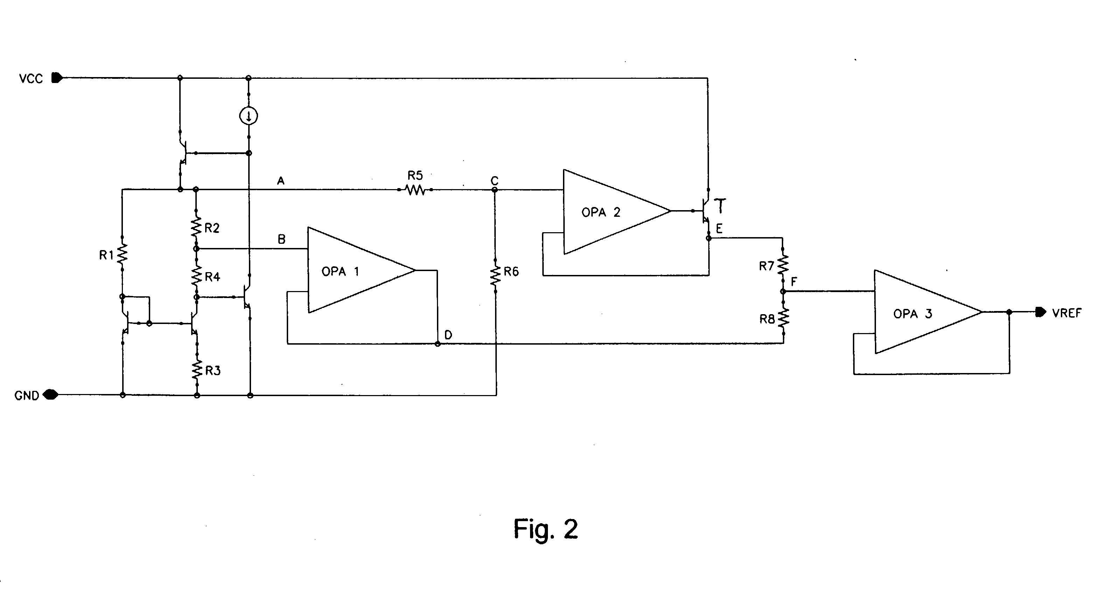

For the purpose, the circuit diagram of Figure 2 is shown to include a modified bandgap circuit inserted between a ground GND and a power supply line Vcc.

The output terminal A supplies a voltage of constant value, whereas the terminal B, which is connected to an intermediate node of the voltage divider R2, R4, supplies a voltage whose value decreases with a rising temperature.

Connected between the terminal A and ground is another voltage divider formed by resistors R5 and R6.

Connected to the terminal B is an input terminal of an operational amplifier OPA1 whose output terminal D is feedback connected to a second input terminal.

The operational amplifier, as feedback in the manner just described, has a gain of unity and forms a circuit of the voltage-follower type, well known to the skilled ones in the art.

A second operational amplifier OPA2, of which the final transistor T has been shown, is also feedback for a gain of unity.

The second amplifier has an input terminal connected to an intermediate node C of the voltage divider R5, R6.

A final voltage divider, consisting of resistors R7 and R8, is inserted between the output terminal D of the operational amplifier OPA1 and the output terminal E of the operational amplifier OPA2 formed by the emitter terminal of the NPN transistor T.

In this case, the operational amplifier forms, by means of the transistor T, a circuit element which is also of the voltage-follower type, but with a basic characteristic of unidirectional conduction.

To perform this function, a diode could be provided as the final component of the operational amplifier OPA2, with the cathode terminal of the diode arranged to form the output terminal of the amplifier.

Finally, connected between an intermediate node F of the voltage divider R7, R8 and the output terminal of the reference voltage VREF generator, is a further operational amplifier OPA3 feedback for a gain of unity.

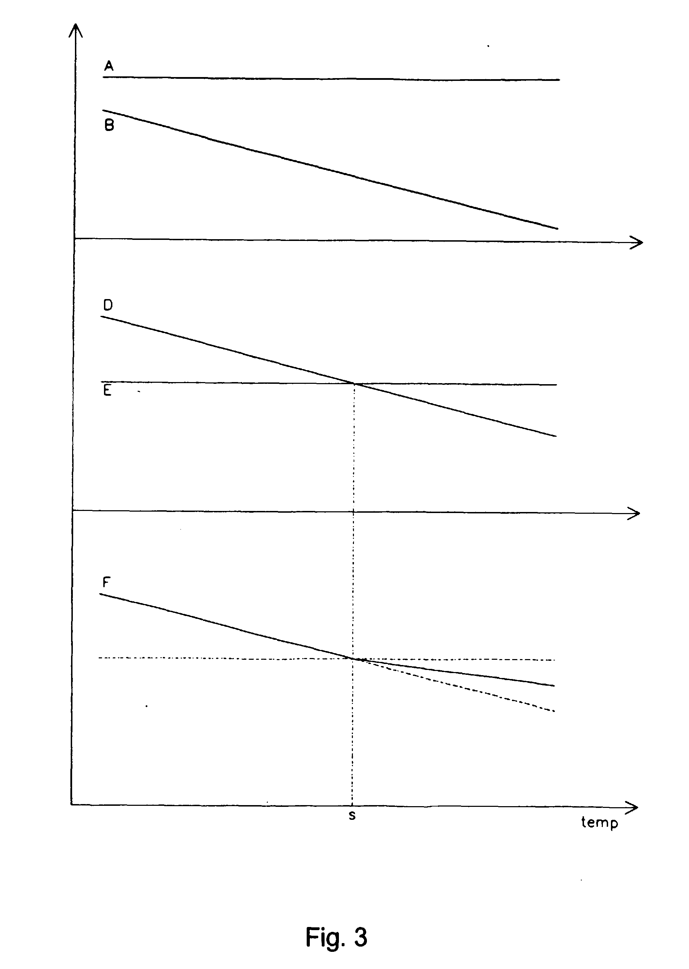

Illustrated by Figure 3 are the characteristics versus temperature of the voltage signals at the various terminals and circuit nodes of the circuit shown in Figure 2, namely A, B, D, E and F.

To revert to the aforementioned demand for a dual slope characteristic to charge automotive batteries, the reference voltage generator of this invention can provide a reference voltage having a decreasing behavior versus temperature with two different slopes separated by a turning point at 70°C, the segment with a steeper slope of the characteristic lying between -35°C and 70°C, and the shallower segment from 70°C to 150°C.

The solution to the problem is based on a combination of a first reference having a thermal coefficient of zero with a second reference having a thermal coefficient which is exactly the equal of that specified for the -35°C-to-70°C segment.

To obtain the above references, a modification has been made in the Widlar bandgap circuit (Figure 1), as mentioned above, whereby the values of the resistors R2 and R4 are altered to provide a voltage having a zero thermal coefficient and a voltage having a negative thermal coefficient.

The voltage with zero thermal coefficient, A, is applied to the resistive divider comprising R5 and R6, and the voltage with negative thermal coefficient, B, is applied to the operational amplifier OPA1, as feedback for a gain of unity, which is to provide the signal B at a low impedance D.

The resistive divider R5 and R6 establishes the slope turning point of the final reference VREF; the signal C, being the divided signal A, is applied to the operational amplifier OPA2, also feedback for a gain of unity by the use of an NPN transistor.

The signals D and E are combined by the resistive set R7, R8 in the following manner.

At temperatures below "S", Figure 3, the voltage D is higher than the voltage E but the operational amplifier OPA2, feedback as mentioned, cannot draw current and, since no current is flowed through the leg R7, R8, the voltage F will be the same as voltage D.

At temperatures above "S", the voltage D is lower than E, and the operational amplifier OPA2 can, therefore, be operated to supply current to the leg R7, R8, whereby the resultant voltage F will be a split share of D and E. The operational amplifier OPA3 provides the voltage F at low impedance.

Major features of the reference voltage generator of this invention are high accuracy, low noise, and enhanced flexibility in that, by the mere alteration in value of a few resistors, we are now able to change both the slopes of the characteristic versus temperature and the turning point of such slopes.

And where a demand existed from the market for reference voltage generators having a temperature characteristic with multiple slopes, it would be sufficient to increase the number of the resistors (e.g., R4, R41, R42,...) in the voltage divider of the bandgap circuit and tap the voltages from the various resultant intermediate nodes (B, B1, B2,...).

Each of these nodes would be connected to the final node F through a respective voltage-follower circuit and a respective resistor. The remainder of the circuit may either be left unaltered or duplicated in turn.

## Claims

1. A reference voltage generator having a dual slope temperature characteristic and being integratable monolithically, for use in a voltage regulator, characterized in that it comprises a circuit means effective to generate a first voltage having a thermal drift coefficient (A) of zero and a second voltage having a predetermined non-zero thermal drift coefficient (B), a first voltage divider (R5,R6) and first voltage-follower circuit (OPA1) which are respectively applied said first and second voltages, at least a unidirectional conduction amplifier circuit (OPA2) having an input terminal connected to an intermediate node (C) of said first voltage divider and an output terminal connected through a first resistive element (R7) to an output circuit node (F) which is coupled to an output terminal of the reference voltage generator, also connected to said output circuit node through a second resistive element (R8), being an output terminal of said first voltage follower circuit.

2. A voltage generator according to Claim 1, characterized in that, connected between the output circuit node and the output terminal of the generator, is a second circuit (OPA3) of the voltage-follower type.

3. A voltage generator according to either Claim 1 or 2, characterized in that the circuit means effective to generate said first and second voltages comprises a bandgap type of circuit (R1,R2,R3,R4).

4. A voltage generator according to Claim 3, characterized in that said second voltage is generated between a ground (GND) and an intermediate node of a voltage divider, between one terminal of which and said ground said first voltage is generated.

5. A voltage generator according to any of Claims 1, 2 and 3, characterized in that the value of said second voltage decreases as temperature rises.

6. A voltage generator according to any of Claims 1, 2, 3, 4 and 5, characterized in that the first voltage-follower circuit comprises a feedback operational amplifier having a gain of unity.

7. A voltage generator according to any of Claims 1, 2, 3, 4, 5 and 6, characterized in that the unidirectional conduction amplifier circuit comprises a feedback operational amplifier having a circuit element of junction type at its output end.

8. A voltage generator according to Claim 7, characterized in that the circuit element of junction type comprises a diode whose cathode is an output terminal of the operational amplifier.

9. A voltage generator according to Claim 7, characterized in that the junction type of circuit element is a bipolar transistor (T) having its emitter terminal connected to the first resistive element (R7) and feedback connected to an input terminal of the operational amplifier, and having its collector terminal connected to a power supply line.

10. A voltage generator according to any of Claims 2, 3, 4, 5, 6, 7, 8 and 9, characterized in that the second voltage follower circuit is a feedback operational amplifier having a gain of unity.

## Patentansprüche

1. Referenzspannungsgenerator mit einer zwei Steigungen aufweisenden Temperaturkennlinie und monolithisch integrierbar zur Verwendung in einem Spannungsregler, dadurch gekennzeichnet, daß er eine Schaltungseinrichtung aufweist zum Generieren einer ersten Spannung mit einem Temperaturdrift-Koeffizienten (A) von null und einer zweiten Spannung mit einem vorbestimmten, von null verschiedenen Temperaturdrift-Koeffizienten (B), einen ersten Spannungsteiler (R5, R6) und eine erste Spannungsfolgerschaltung (OPA1), an die die erste bzw. die zweite Spannung gelegt werden, mindestens eine unidirektional leitende Verstärkerschaltung (OPA2), die mit einem Eingangsanschluß an einen Zwischenknoten (C) des ersten Spannungsteilers und mit einem Ausgangsanschluß über ein erstes Widerstandselement (R7) an einen Ausgangsschaltkreisknoten (F) anschlossen ist, wobei letzterer mit einem Ausgangsanschluß des Referenzspannungsgenerators gekoppelt ist und an den Ausgangsschaltkreisknoten außerdem über ein zweites Widerstandselement (R8) ein Ausgangsanschluß der ersten Spannungsfolgerschaltung angeschlossen ist.

2. Spannungsgenerator nach Anspruch 1, dadurch gekennzeichnet, daß zwischen dem Ausgangsschaltkreisknoten und dem Ausgangsanschluß des Generators eine zweite Schaltung (OPA3) vom Spannungsfolgertyp liegt.

3. Spannungsgenerator nach Anspruch 1 oder 2, dadurch gekennzeichnet, daß die Schaltungseinrichtung zum Erzeugen der. ersten und der zweiten Spannung eine Bandlücken-Schaltung (R1, R2, R3, R4) aufweist.

4. Spannungsgenerator nach Anspruch 3, dadurch gekennzeichnet, daß die zweite Spannung zwischen Erde (GND) und einem Zwischenknoten eines Spannungsteilers erzeugt wird, zwischen dessen einem Anschluß und Erde die erste Spannung erzeugt wird.

5. Spannungsgenerator nach Anspruch 1, 2 und 3, dadurch gekennzeichnet, daß der Wert der zweiten Spannung mit zunehmender Temperatur abnimmt.

6. Spannungsgenerator nach einem der Ansprüche 1, 2, 3, 4 und 5, dadurch gekennzeichnet, daß die erste Spannungsfolgerschaltung einen rückgekoppelten Operationsverstärker mit der Verstärkung eins aufweist.

7. Spannungsgenerator nach einem der Ansprüche 1, 2, 3, 4, 5 und 6, dadurch gekennzeichnet, daß die in einer Richtung leitende Verstärkerschaltung einen rückgekoppelten Operationsverstärker aufweist, an dessen Ausgang sich ein Schaltungselement vom Übergangs-Typ befindet.

8. Spannungsgenerator nach Anspruch 7, dadurch gekennzeichnet, daß das Schaltungselement vom Übergangstyp eine Diode aufweist, deren Kathode einen Ausgangsanschluß des Operationsverstärkers bildet.

9. Spannungsgenerator nach Anspruch 7, dadurch gekennzeichnet, daß das Schaltungselement vom Übergangstyp ein Bipolartransistor (T) ist, dessen Emitteranschluß an das erste Widerstandselement (R7) angeschlossen und an einen Eingangsanschluß des Operationsverstärkers zurückgeführt ist, und der mit seinem Kollektoranschluß an eine Spannungsversorgungsleitung angeschlossen ist.

10. Spannungsgenerator nach einem der Ansprüche 2, 3, 4, 5, 6, 7, 8 und 9, dadurch gekennzeichnet, daß die zweite Spannungsfolgerschaltung ein rückgekoppelter Operationsverstärker mit der Verstärkung eins ist.

## Revendications

1. Générateur de tension de référence ayant une caractéristique en température à pente double et intégrable de manière monolithique, pour une utilisation dans un régulateur de tension, caractérisé en ce qu'il comprend un moyen de circuit agissant pour produire une première tension ayant un coefficient de dérive thermique (A) nul et une seconde tension ayant un coefficient de dérive thermique prédéterminé non nul (B), un premier diviseur de tension (R5, R6) et un premier circuit suiveur de tension (OPA1) qui reçoivent respectivement les première et seconde tensions, au moins un circuit amplificateur à conduction unidirectionnelle (OPA2) ayant une borne d'entrée connectée à un noeud intermédiaire (C) du premier diviseur de tension et une borne de sortie connectée par l'intermédiaire d'un premier élément résistif (R7) à un noeud de sortie du circuit (F) qui est couplé à une borne de sortie du générateur de tension de référence, une borne de sortie du premier circuit suiveur de tension étant également connectée au noeud de sortie du circuit par l'intermédiaire d'un deuxième élément résistif (R8).

2. Générateur de tension selon la revendication 1, caractérisé en ce qu'un deuxième circuit (OPA3) de type suiveur de tension est connecté entre le noeud de sortie du circuit et la borne de sortie du générateur.

3. Générateur de tension selon la revendication 1 ou 2, caractérisé en ce que le moyen de circuit agissant pour produire les première et seconde tensions comprend un circuit de type à intervalle de bande (R1, R2, R3, R4).

4. Générateur de tension selon la revendication 3, caractérisé en ce que la seconde tension est produite entre une masse (GND) et un noeud intermédiaire d'un diviseur de tension, la première tension étant produite entre une borne du diviseur de tension et la masse.

5. Générateur de tension selon l'une quelconque des revendications 1, 2 et 3, caractérisé en ce que la valeur de la seconde tension diminue lorsque la température croît.

6. Générateur de tension selon l'une quelconque des revendications 1, 2, 3, 4 et 5, caractérisé en ce que le premier circuit suiveur de tension comprend un amplificateur opérationnel à contre-réaction et de gain unité.

7. Générateur de tension selon l'une quelconque des revendications 1, 2, 3, 4, 5 et 6, caractérisé en ce que le circuit amplificateur à conduction unidirectionnelle comprend un amplificateur opérationnel à contre-réaction ayant un élément de circuit de type à jonction à sa borne de sortie.

8. Générateur de tension selon la revendication 7, caractérisé en ce que l'élément de circuit de type à jonction comprend une diode dont la cathode est une borne de sortie de l'amplificateur opérationnel.

9. Générateur de tension selon la revendication 7, caractérisé en ce que l'élément de circuit de type à jonction est un transistor bipolaire (T) ayant sa borne d'émetteur connectée au premier élément résistif (R7) et connecté en contre-réaction à une borne d'entrée de l'amplificateur opérationnel, et ayant sa borne de collecteur connectée à une ligne d'alimentation.

10. Générateur de tension selon l'une quelconque des revendications 2, 3, 4, 5, 6, 7, 8 et 9, caractérisé en ce que le second circuit suiveur de tension est un amplificateur opérationnel à contre-réaction de gain unité.
